# EUROPÄISCHE PATENTSCHRIFT

(11) **EP 1 541 652 B1**
(45) Veröffentlichungstag und Bekanntmachung des Hinweises auf die Patenterteilung: **04.10.2006**
(21) Anmeldenummer: 04028184.2
(22) Anmeldetag: 27.11.2004
(51) Int. Cl.: C09G 1/00, C08K 3/22

(54) **UV-Absorber enthaltende Autopflegemittel**
Automotive cleaning and protectant compositions containing UV light absorbers
Compositions de nettoyage et de protection pour automobiles contenant des absorbeurs d'uv

(30) Priorität: 10.12.2003 DE 10357683
(43) Veröffentlichungstag der Anmeldung: 15.06.2005
(73) Patentinhaber: Goldschmidt GmbH, 45127 Essen (DE)
(72) Erfinder: Müller, Felix, Dr., 42555 Velbert (DE); Winter, Patrick, 45289 Essen (DE)

(56) Entgegenhaltungen:
- EP-A- 1 164 159
- EP-A- 1 310 235
- EP-A- 1 477 159
- WO-A-03/076506
- WO-A-20/04111136

## Beschreibung

Die Erfindung betrifft pastöse und flüssige Emulsionspflegemittel zur Reinigung, Pflege und Konservierung von Lack- und Zierteilen von Kraftfahrzeugen, die als UV-Filter Zinkoxid mit Korngrößen im nm-Bereich enthalten. Die Pflegemittel schützen den Fahrzeuglack vor schädlichen Einflüssen durch UV-Strahlung und Sonnenlicht und verbessern so nachhaltig das optische Erscheinungsbild eines Fahrzeugs.

In der modernen Autopflege wird immer mehr Wert auf einen langanhaltenden Schutz des Fahrzeuglackes gelegt. Die zunehmenden Umwelteinflüsse, die Umstellung auf wasserbasierende Lacksysteme, das zunehmende Durchschnittsalter der Fahrzeuge im Straßenverkehr und die in vielen Märkten zu beobachtende Zunahme von Fahrzeugen mit hellen, empfindlichen Lackierungen (weiß, orange, gelb, rot) erfordern neue Ansätze, den wertvollen Lack zu schützen.

Die Autopflege besteht normalerweise aus zwei Arbeitsschritten:
1. Der Autowäsche, bei der Schmutzanhaftungen entfernt werden durch mechanische Behandlung (Bürsten) und oberflächenaktive Mittel (Autoshampoo). Nach der Wäsche erlaubt das Ablaufhilfsmittel eine schnelle Trocknung durch aufziehende kationische Tenside und einen Glanzeffekt.
2. Die Autopolitur, bei der durch abrasive Stoffe der Lack des Fahrzeugs tiefergehend gereinigt und die angegriffene oberste Schicht entfernt wird. Um den Glanz des Fahrzeuglackes, der durch die polierte Lackoberfläche verstärkt wird, zu erhalten, wird Autopolituren aminomodifiziertes Siloxan zur Erreichung einer hohen Detergentienbeständigkeit und Siliconöl als Glanzmittel zugefügt (z. B. beschrieben in US 5 968 238).

Diese Maßnahmen sind aber nicht geeignet, die Lackoberflächen, insbesondere die nach der Politur mit abrasiven Bestandteilen freigelegten "frischen" Lackoberflächen vor dem schädigenden Einfluss der UV-Strahlung zu schützen.

Die Patentliteratur zeigt, dass diesbezüglich einige Versuche unternommen wurden, insbesondere UV-absorbierende Stoffe, die im Kosmetikbereich in Sonnenschutzformulierungen eingesetzt wurden, auch in der Autopolitur einzusetzen.

EP-A-0 373 838 lehrt den Einsatz von 1,3-Diketocyclohexanverbindungen als UV-Absorber in der Autopolitur.

Die US 4 889 947 beschreibt Naphthalenylidene, die für die Anwendung in Sonnenschutzformulierungen für die menschliche Haut geeignet sind, aber auch die Möglichkeit anderer Anwendungen wie der Autopolitur wird erwähnt.

Die JP-A-57-182371 beschreibt Salicylate, die neben dem UV-Schutz auch noch fungizide Eigenschaften haben sollen.

Allen organischen UV-Filtersubstanzen ist jedoch gemeinsam, dass sie nicht unbedenklich anwendbar sind sondern dass auf bestimmten Lacken UV-katalysierte oder durch Photoelektronentransfer sensibilisierte Reaktionen mit den im Lack enthaltenen Pigmenten erfolgen können, wodurch eine Beschädigung des Autolacks möglich ist. Gerade organische UV-aktive Verbindungen können neben dem erwünschten Quencheffekt auch eine Vielzahl von Nebenreaktionen auslösen, insbesondere bei besonders starker oder langandauernder Exposition.

Daher ist der Einsatz dieser Produkte, die für die Applikation auf menschlicher Haut, wie in einer Vielzahl von Studien gezeigt, relativ unbedenklich sind, in einer Anwendung wie der Autopflege nicht angezeigt.

Der Versuch, für den Verbraucher akzeptable anorganische Pigmente als UV-Filtersubstanzen einzusetzen, führte bisher nicht zum Erfolg.

Zinkoxid in makroskopischer Körnung wurde bereits in Autopolituren als Abrasivkörper verwendet, wie BE 714 006 lehrt. In der dort beschriebenen Form ist es als UV-Schutzadditiv jedoch ungeeignet.

Das in kosmetischen Sonnenschutzformulierungen bevorzugt eingesetzte Titandioxid (Anatas, Rutil) mit mittleren Korngrößen im nm-Bereich zeigt weder allein noch in Kombination mit den dort üblichen organischen UV-Filtern in Autopflegemitteln eine Wirkung.

Aufgabe der vorliegenden Erfindung war es daher, für den Verbraucher geeignete pastöse und flüssige Emulsionspflegemittel zur Reinigung, Pflege und Konservierung von Lack- und Zierteilen von Kraftfahrzeugen insbesondere für Autopolituren zu entwickeln, die gleichzeitig einen hohen Lichtschutzeffekt auf dem Autolack ergeben.

Diese Aufgabe wird gelöst durch die Verwendung von nanostrukturiertem Zinkoxid (ZnO mit mittleren Korngrößen im nm-Bereich).

Gegenstand der Erfindung sind daher pastöse und flüssige Emulsionspflegemittel zur Reinigung, Pflege und Konservierung von Lack- und Zierteilen von Kraftfahrzeugen, welche dadurch gekennzeichnet sind, dass sie als UV-Filter 2 bis 15 Gew.-%, bezogen auf das Gesamtgewicht des Pflegemittels, Zinkoxid mit Korngrößen im nm-Bereich enthalten.

Überraschenderweise erfüllt nanostrukturiertes Zinkoxid das eine mittlere Teilchengröße unter 400 nm, insbesondere unter 300 nm, aufweist die Anforderung, einen UV-Schutz für Lackoberflächen zu gewährleisten ohne gleichzeitig photochemische Nebenreaktionen zu katalysieren. Andere getestete nanostrukturierte Pigmente, die dem Anforderungsprofil entsprechen, wie Titandioxidtypen zeigten wie unten beschrieben keine erfindungsgemäße Wirkung.

Die Herstellung des erfindungsgemäß mitverwendeten nanostrukturierten Zinkoxides wird in der DE-A-102 12 680 beschrieben, wie auch Methoden zur Kontrolle des Medians der Partikelgröße. Auf die in dieser Patentanmeldung beschriebenen Ansprüche wird in vollem Umfang Bezug genommen.

Diese Zinkoxide werden in Konzentrationen von 2 bis 15 Gew.-%, vorzugsweise 5 bis 7 Gew.-%, bezogen auf das Gesamtgewicht des Pflegemittels eingesetzt.

Eine bevorzugte weitere erfindungsgemäße Ausführungsform ist die Verwendung von Zinkoxid, das durch ein besonderes Überzugsverfahren (Coating) hydrophob beschichtet wird.

Geeignete Coatingmittel sind die hierführ im Stand der Technik bekannten Verbindungen, insbesondere aber organomodifizierte Silane wie Oktyltrimethoxysilan, die einen hydrophoben Film um die Nanopartikel erzeugen.

Als Pflegemittel sind erfindungsgemäß alle handelüblichen W/O oder O/W basierten Emulsionen verwendbar, insbesondere Emulsionen von Siliconölen, Aminosiloxanen oder anderen Siliconderivaten, die zusätzlich Abrasivstoffe wie Aluminiumoxide oder Silicate und gegebenenfalls andere Hilfsstoffe, Konservierungsstoffe, Emulgatoren und Konsistenzgeber enthalten können.

Das Zinkoxid kann dabei als Pulver aus der Produktion direkt oder in Dispersionsform eingesetzt werden. Dispergiert sein kann das Zinkoxid dabei in Wasser, organischen Lösungsmitteln oder - hydrophobiert - auch in Siliconölen und deren organomodifizierten Derivaten.

### Testverfahren:

### Dispergierverfahren:

Die unten aufgeführten Dispersionen wurden im Labor mit einem H-Trieb Rührwerk vom Typ 4REB/L der Fa. Heynau, München hergestellt. Mit einer Disperserscheibe, mit einem Durchmesser von 4 cm, wurden die Mischungen für 5 Minuten dispergiert. Die Rührgeschwindigkeit betrug dabei 2.500 U/min.

### Einpflegen der Oberflächen:

Das Einpflegen der lackierten Oberflächen geschieht nach der konventionellen Methode, mit der handelsübliche Polituren oder Wachse aufgetragen werden. Zur Gewährleistung, dass immer die gleiche Menge Politur auf den Lack aufgetragen wurde, wurden auf einer Fläche von 4,5 x 7,5 cm exakt 1,0 g einer Politur aufgetragen. Zur gleichmäßigen Verteilung der Politur auf dieser Fläche wurde ein Einweg-Kosmetiktuch mit einer Größe von 20 x 20 cm, zu einem Viertel der Größe gefaltet verwendet. Nachdem die aufgetragene und gleichmäßig verteilte Politur getrocknet war, wurde der eingepflegte Lack mit handelsüblicher Polierwatte ca. 30 Sekunden ohne wesentlichen Druck auspoliert.

### UV-Bestrahlung:

Um den Vergilbungseffekt eines Lackes zu Simulieren wurde eine UV-Handlampe des Typs NU-15 KL, mit zwei UV-Röhren von einer Wellenlänge von 254 nm und 366 nm und einer Leistung von jeweils 15 Watt verwendet.

### Bestimmung des Farbwertes:

Die Farbwertmessung erfolgte mit einem Gerät Typ SP68 Spectrophotometer der Firma X-Rite.

Die Messmethode erfolgt gemäß dem CIELAB-System. In diesem, auch CIE L*a*b* genannten System, liegen alle Farbtöne gleicher Helligkeit auf einer kreisförmigen, flachen Ebene auf der sich die a*- und b*-Achsen befinden. Positive a*-Werte sind rötlich, negative a*-Werte grünlich, positive b*-Werte gelblich und negative b*-Werte bläulich. Am Äquator der Farbscheibe liegen die reinen Farbtöne hoher Sättigung. Nach innen nimmt die Sättigung ab, im Zentrum ist sie Null (unbunt, grau).
Zur Erfassung eines Vergilbungseffektes wurde von den lackierten Oberflächen jeweils der b*-Wert ermittelt. Dazu wurde an drei Punkten einer Oberfläche jeweils drei mal der b*-Wert ermittelt. Diese wurden gemittelt und ergeben einen repräsentativen Wert, der in den Beispielen aufgeführt wird.

### Durchführung:

### Beispiel 1:

1,0 g nanostrukturiertes unbeschichtetes Zinkoxid (PH 10520 ZnO gemäß DE-A-102 12 680) mit einer spezifischen Oberfläche von 19 m²/g wurden in 49,0 g einer handelsüblichen Polish & Wax Autopolitur (Lösemittelfrei, auf wässriger Basis) gemäß der oben beschriebenen Methode eindispergiert.

Ein mit rotem Autolack (Fa. DeBeer, Art-Nr 9952/1) + Klarlack H5420 und Härter HS 420 (Fa. DeBeer) im Verhältnis 2 : 1 lackiertes Blech wurde, gemäß der oben beschriebenen Methode, zur Hälfte mit dieser Dispersion eingepflegt. Die andere Hälfte wurde mit der selben Politur, jedoch ohne Zusatz von Zinkoxid behandelt.
Diese Oberflächen wurde mit UV-Licht (254 nm/366 nm) über einen Zeitraum von vier Monaten bestrahlt.
Bei dem Blindwert handelt es sich um den gleichen Lack, dieser wird jedoch nicht UV-behandelt und dient somit als Referenz.

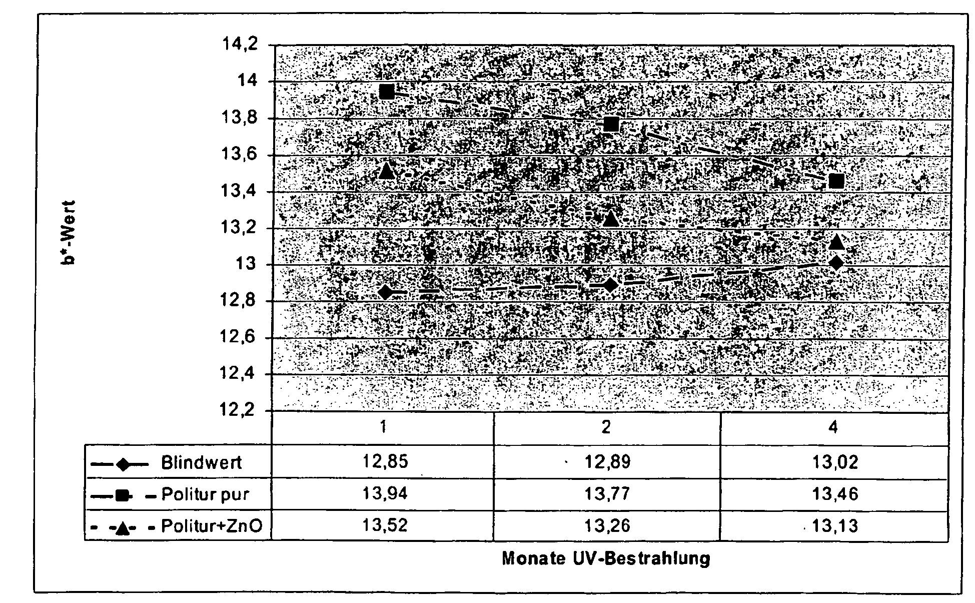

Der Blindwert, der keiner UV-Strahlenbelastung ausgesetzt wurde, gibt den unverfälschten Farbton wieder. Um so größer die zahlenmäßige Abweichung der anderen strahlenbelasteten Exponate ist, um so größer ist der Vergilbungseffekt. Wie ersichtlich, hat die erfindungsgemäße Formulierung (Politur + ZnO) einen deutlichen Schutzeffekt gegenüber der Politur ohne erfindungsgemäßem Zusatz (Politur pur).

### Beispiel 2:

2,5 g Titandioxid wurden in 47,5 g einer handelsüblichen Polish & Wax Autopolitur (Lösemittelfrei, auf wässriger Basis) eindispergiert. Für diese Versuche wurde ein mit einem Weißlack, basierend auf Silikoftal® ED (Tego Chemie Service TCS) lackiertes Blech verwendet. Dieser Lack ist UV-sensitiv und verkürzt die Zeit der UV-Bestrahlung auf wenige Tage um einen Vergilbungseffekt zu erzielen. Dieses Blech wurde gemäß der oben beschriebenen Methode, zur Hälfte mit dieser Dispersion eingepflegt. Die andere Hälfte wurde mit der gleichen Politur, jedoch ohne Zusatz von Titandioxid behandelt.
Über einen Zeitraum von 7 Tagen wurde diese Oberfläche mit UV-Licht (254 nm/366 nm) bestrahlt.

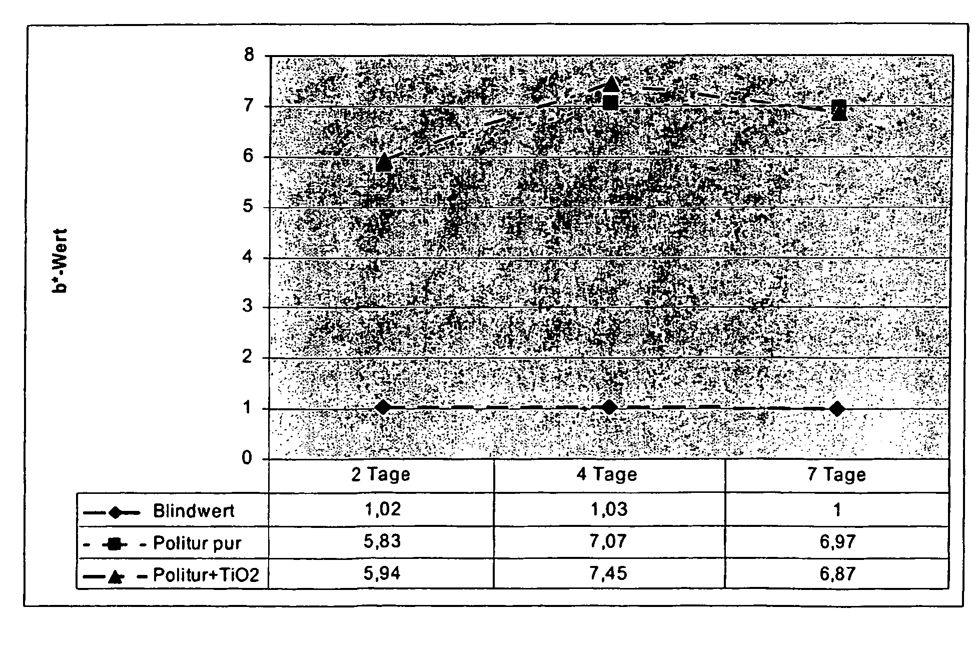

Wie ersichtlich, hat die Verwendung des in der Kosmetik für Sonnenschutzformulierungen eingesetzte Titandioxid auf dem vorliegenden Gebiet keinen positiven Effekt. Im Gegensatz zum erfindungsgemäß mitverwendeten ZnO weist es sogar einen Negativeffekt auf: Der Vergilbungsgrad des Lackes ist größer (Politur + TiO₂) als bei der handelsüblichen Politur (Politur pur).

### Beispiel 3:

2,5 g mit Oktyl-trimethoxy-silan hydrophobiertes ZnO (VT 2665) mit einer Oberfläche von 19 ± 1 m²/g Vorschlag (Degussa, unveröffentlichte EP-Anmeld.-Nr 03018678.7) wurden in 47,5 g Sonax Polish & Wax Autopolitur (Lösemittelfrei, auf wässriger Basis) eindispergiert. Ein mit UV sensitivem Weißlack, basierend auf Silikoftal ED, lackiertes Blech wurde gemäß der oben beschriebenen Methode, zur Hälfte mit dieser Dispersion eingepflegt. Die andere Hälfte wurde mit der gleichen Politur, jedoch ohne Zusatz von Zinkoxid, behandelt.
Über einen Zeitraum von 7 Tagen wurden diese Oberflächen mit UV-Licht (254 nm/366 nm) bestrahlt.

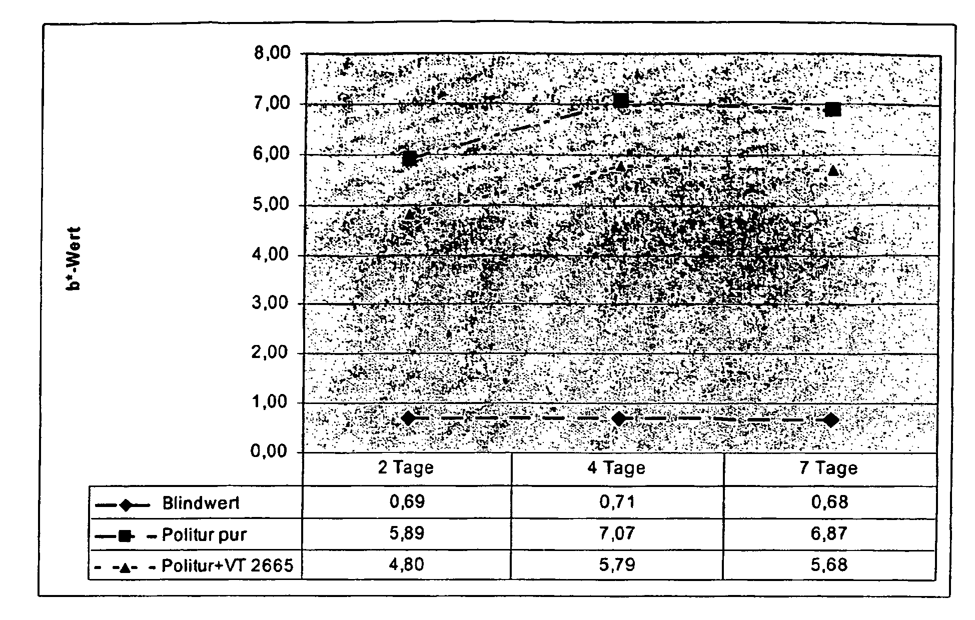

Die ermittelten Werte zeigen, dass mit dem hier verwendeten Zinkoxid (VT 2665) der Vergilbungseffekt eines Lackes durch UV-Einstrahlung um 17 % gemindert wird.

### Beispiel 4:

2,5 g mit Oktyl-trimethoxy-silan hydrophobiertes ZnO mit einer Oberfläche von 19 ± 1 m²/g (PH 12703; Degussa, unveröffentlichte EP-Anmeld.-Nr 03018678.7) wurden in 47,5 g Sonax Polish & Wax Autopolitur (Lösemittelfrei, auf wässriger Basis) eindispergiert. Ein mit UV sensitivem Weißlack, basierend auf Silikoftal® ED, lackiertes Blech wurde gemäß der oben beschriebenen Methode, zur Hälfte mit dieser Dispersion eingepflegt. Die andere Hälfte wurde mit der gleichen Politur, jedoch ohne Zusatz von Zinkoxid, behandelt.
Über einen Zeitraum von 7 Tagen wurden diese Oberflächen mit UV-Licht (254 nm/366 nm) bestrahlt.

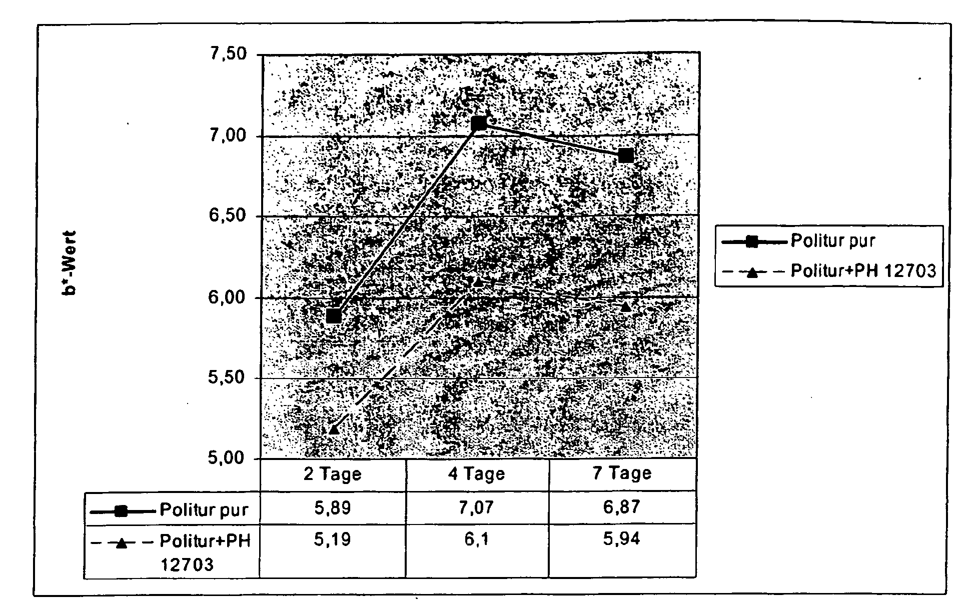

Die ermittelten Werte zeigen, dass mit dem hier verwendeten Zinkoxid (PH 12703) der Vergilbungseffekt eines Lackes durch UV-Einstrahlung um rund 14 % gemindert wird.

### Beispiel 5:

Für diese Versuche wurde eine Formulierung für eine detergentienbeständige Autopolitur aus dem eigenen Hause verwendet:

### Rezeptur:

| | |
|---|---|
| TAGAT® S Ethoxylierte Fettsäureester | 3,6 % |
| Wasser, demin. | 10,0 % |
| Lunacerin W 60 | 2,0 % |
| TEGIN® M Glycerinmonodistearat | 1,8 % |
| TEGILOXAN 350 Siliconöl | 5,0 % |
| TEGO POLISH | |
| ADDITIV C 3191 Aminosiloxan | 3,0 % |
| Wasser, demin. | 70,4 % |
| Natriumchlorid | 0,2 % |

Ansatz 1: 2,5 g mit Oktyl-trimethoxy-silan hydrophobiertes ZnO mit einer Oberfläche von 19 ± 1 m²/g (VT 2665) wurden in 47,5 g dieser Politur eindispergiert. Ein mit UV sensitivem Weißlack, basierend auf Silikoftal® ED, lackiertes Blech wurde gemäß der oben beschriebenen Methode, zur Hälfte mit dieser Dispersion eingepflegt.

Ansatz 2: 2,5 g mit Oktyl-trimethoxy-silan hydrophobiertes ZnO mit einer Oberfläche von 19 ± 1 m²/g (PH 12703) wurden in 47,5 g dieser Politur eindispergiert. Die andere Hälfte der oben beschriebenen Oberfläche wurde mit dieser Dispersion eingepflegt.

Als Referenz dient der gleiche Lack, der ebenfalls mit der oben beschriebenen Politur, jedoch ohne Zusatz von Zinkoxid, eingepflegt wurde.
Über einen Zeitraum von 7 Tagen wurden diese Oberflächen mit UV-Licht (254 nm/366 nm) bestrahlt.

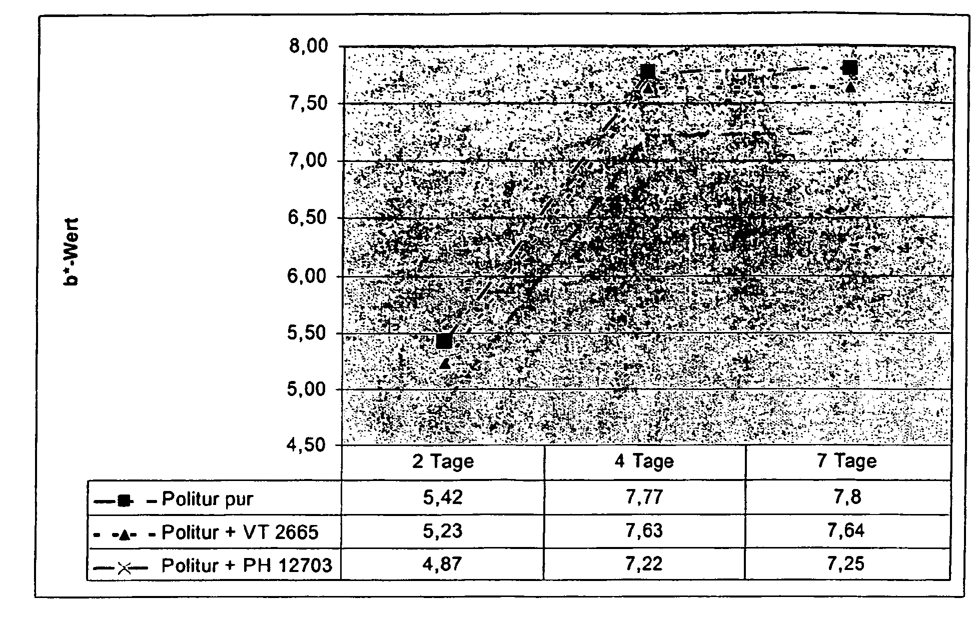

Auch hier ist ein deutlicher Schutzeffekt des ZnO-Zusatzes zu erkennen.

### Beispiel 6:

In diesem Beispiel wurde die Autopolitur Sonax Xtreme Polish & Wax 3 verwendet.

Ansatz 1: 2,5 g hydrophobiertes ZnO mit einer Oberfläche von 19 ± 1 m²/g (VT 2665) wurden in 47,5 g dieser Politur eindispergiert. Ein mit UV sensitivem Weißlack, basierend auf Silikoftal ED, lackiertes Blech wurde gemäß der oben beschriebenen Methode, zur Hälfte mit dieser Dispersion eingepflegt.

Ansatz 2: 2,5 g hydrophobiertes ZnO mit einer Oberfläche von 19 ± 1 m²/g (PH 12703) wurden in 47,5 g dieser Politur eindispergiert. Die andere Hälfte der oben beschriebenen Oberfläche wurde mit dieser Dispersion eingepflegt.

Als Referenz dient der gleiche Lack der ebenfalls mit der oben beschriebenen Politur, jedoch ohne Zusatz von Zinkoxid, eingepflegt wurde.
Über einen Zeitraum von 7 Tagen wurden diese Oberflächen mit UV-Licht (254 nm/ 366 nm) bestrahlt.

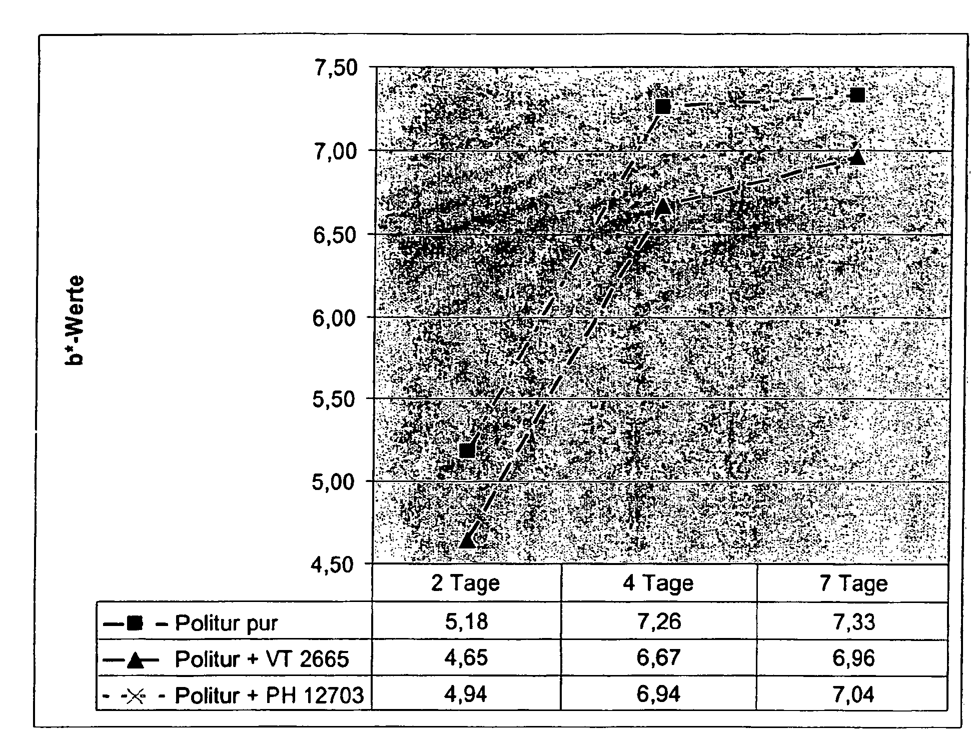

Auch hier ist ein deutlicher Schutzeffekt des ZnO-Zusatzes zu erkennen.

## Patentansprüche

1. Verwendung von 2 bis 15 Gew.-%, bezogen auf das Gesamtgewicht des Pflegemittels, Zinkoxid mit Korngrößen im nm-Bereich als UV-Filter in pastösen und flüssigen Emulsionspflegemittenl zur Reinigung, Pflege und Konservierung von Lack- und Zierteilen von Kraftfahrzeugen.

2. Verwendung von Zinkoxid gemäß Anspruch 1, **dadurch gekennzeichnet, dass** das Zinkoxid Korngrößen im Mittel von ≤ 400, insbesondere ≤ 300 nm und eine BET-Oberfläche von 2 bis 100 m² aufweist.

3. Verwendung von Zinkoxid gemäß Anspruch 1, **dadurch gekennzeichnet, dass** das Zinkoxid Korngrößen im Mittel von ≤ 400, insbesondere ≤ 300 nm und eine BET-Oberfläche von 5 bis 50 m² aufweist.

4. Verwendung von Zinkoxid gemäß Anspruch 1, **dadurch gekennzeichnet, dass** das Zinkoxid Korngrößen im Mittel von ≤ 400, insbesondere ≤ 300 nm und eine BET-Oberfläche von 10 bis 30 m² aufweist.

5. Verwendung von Zinkoxid gemäß Anspruch 1, **dadurch gekennzeichnet, dass** das Zinkoxid Korngrößen im Mittel von ≤ 400, insbesondere ≤ 300 nm und eine BET-Oberfläche von 15 bis 25 m² aufweist.

6. Verwendung von Zinkoxid gemäß den Ansprüchen 1 bis 5, **dadurch gekennzeichnet, dass** hydrophobiertes Zinkoxid verwendet wird.

## Claims

1. Use of 2% to 15% by weight, based on the total weight of the care composition, of zinc oxide with particle sizes in the nm range as a UV filter in paste and liquid emulsion care compositions for cleaning, caring for and preserving paint and trim components of motor vehicles.

2. Use of zinc oxide according to Claim 1, **characterized in that** the zinc oxide has mean particle sizes of ≤ 400, in particular ≤ 300 nm and a BET surface area of from 2 to 100 m².

3. Use of zinc oxide according to Claim 1, **characterized in that** the zinc oxide has mean particle sizes of ≤ 400, in particular ≤ 300 nm and a BET surface area of from 5 to 50 m².

4. Use of zinc oxide according to Claim 1, **characterized in that** the zinc oxide has mean particle sizes of ≤ 400, in particular ≤ 300 nm and a BET surface area of from 10 to 30 m².

5. Use of zinc oxide according to Claim 1, **characterized in that** the zinc oxide has mean particle sizes of ≤ 400, in particular ≤ 300 nm and a BET surface area of from 15 to 25 m².

6. Use of zinc oxide according to Claims 1 to 5, **characterized in that** hydrophobicized zinc oxide is used.

## Revendications

1. Utilisation de 2 à 15% en poids, par rapport au poids total de l'agent d'entretien, d'oxyde de zinc présentant des grosseurs de particules dans la plage des nm comme filtre UV dans des agents d'entretien en émulsion, pâteux et liquides, pour le nettoyage, l'entretien et la conservation de parties laquées et décoratives de voitures.

2. Utilisation d'oxyde de zinc selon la revendication 1, **caractérisée en ce que** l'oxyde de zinc présente des grosseurs de particules en moyenne ≤ 400, en particulier ≤ 300 nm et une surface BET de 2 à 100 m².

3. Utilisation d'oxyde de zinc selon la revendication 1, **caractérisée en ce que** l'oxyde de zinc présente des grosseurs de particules en moyenne ≤ 400, en particulier ≤ 300 nm et une surface BET de 5 à 50 m².

4. Utilisation d'oxyde de zinc selon la revendication 1, **caractérisée en ce que** l'oxyde de zinc présente des grosseurs de particules en moyenne ≤ 400, en particulier ≤ 300 nm et une surface BET de 10 à 30 m².

5. Utilisation d'oxyde de zinc selon la revendication 1, **caractérisée en ce que** l'oxyde de zinc présente des grosseurs de particules en moyenne ≤ 400, en particulier ≤ 300 nm et une surface BET de 15 à 25 m².

6. Utilisation d'oxyde de zinc selon les revendications 1 à 5, **caractérisée en ce qu'**on utilise de l'oxyde de zinc hydrofugé.
